Europäisches Patentamt

European Patent Office

Office européen des brevets

(19)

(11) Veröffentlichungsnummer: **0 210 573 B1**

(12) # EUROPÄISCHE PATENTSCHRIFT

(45) Veröffentlichungstag der Patentschrift:
07.11.90

(51) Int. Cl.⁵: **A01G 3/00**, B02C 18/16

(21) Anmeldenummer: **86110023.8**

(22) Anmeldetag: **22.07.86**

(54) Vorrichtung zum Zerkleinern von häcksel- und schnitzelfähigem Gut.

(30) Priorität: **27.07.85 DE 3527030**
**08.08.85 DE 3528507**

(43) Veröffentlichungstag der Anmeldung:
**04.02.87 Patentblatt 87/6**

(45) Bekanntmachung des Hinweises auf die Patenterteilung:
**07.11.90 Patentblatt 90/45**

(84) Benannte Vertragsstaaten:
**AT CH FR GB LI NL SE**

(56) Entgegenhaltungen:
**EP-A- 0 099 561**
**DE-C- 2 934 792**

(73) Patentinhaber: **Cramer Technik GmbH, Reimersstrasse,
D-2950 Leer / Ostfriesland(DE)**

(72) Erfinder: **Cramer, Lüppo, Dipl.-Kfm., Turnerstrasse 12,
D-2950 Leer(DE)**
Erfinder: **Franzen, Gerold, Brunn 208,
D-2951 Nortmoor(DE)**

(74) Vertreter: **Habbel, Hans-Georg, Dipl.-Ing.,
Postfach 3429 Am Kanonengraben 11,
D-4400 Münster(DE)**

## Beschreibung

Die Erfindung bezieht sich auf eine Vorrichtung zum Zerkleinern von häcksel- und schnitzelfähigem Gut gemäß dem Oberbegriff des Hauptanspruches.

Eine gattungsbildende Einrichtung wird z.B. in der DE-PS 29 34 792 beschrieben. Um den unterschiedlich anfallenden, in einer derartigen Vorrichtung zu verarbeitenden Abfallstoffen Rechnung zu tragen, ist insbesondere für das schnitzelfähige Gut ein besonderer Einführstutzen vorgesehen, der unterhalb der Zerkleinerungsvorrichtung für das häckselfähige Gut liegt. Die Messer für das schnitzelfähige Gut, wie Zweige, Äste od. dgl., sollten anders ausgebildet sein als die Zerkleinerungsmesser für das häckselfähige Gut, wobei auch der Anteil des häckselfähigen Gutes, beispielsweise in Gartenbetrieben usw., wesentlich höher als der Anteil des schnitzelfähigen Gutes ist.

Nachteilig bei dieser zum Stand der Technik gehörenden Einrichtung ist, daß das gesamte häckselfähige Gut nach seiner Zerkleinerung in den Bereich der Messer für das schnitzelfähige Gut gelangt und dann erst hier ausgeworfen wird, so daß die Messer für das schnitzelfähige Gut erheblichen zusätzlichen Beanspruchungen unterliegen.

Aus der EP-A 0 099 561 ist eine Vorrichtung zum Zerkleinern von Gut bekannt, bei welcher die Häckselmesser in mehreren Ebenen übereinander in einer Häckselkammer angeordnet sind, während ein Schnitzelmesser in einer darunterliegenden getrennten Schnitzelkammer vorgesehen ist. Diese Anordnung baut außerordentlich aufwendig und hoch und ist daher mit der gattungsbildenden Einrichtung nicht zu vergleichen.

Der Erfindung liegt die Aufgabe zugrunde, die gattungsbildende Einrichtung dahingehend weiterzubilden, daß unter Beibehaltung der Vorteile der Anordnung unterschiedlicher Messer für das häckselfähige und das schnitzelfähige Gut erreicht wird, daß das häckselfähige Gut nicht mehr von den Messern für das schnitzelfähige Gut bearbeitet werden muß. Außerdem soll eine Trennung der Kammern herbeigeführt werden, in denen einerseits das häckselfähige und andererseits das schnitzelfähige Gut bearbeitet wird, ohne daß ein großer konstruktiver Aufwand erforderlich ist.

Diese der Erfindung zugrundeliegende Aufgabe wird durch die Lehre des Hauptanspruches gelöst.

Mit anderen Worten ausgedrückt, schlägt die Erfindung eine Zerkleinerungsvorrichtung mit einer einzigen Messerscheibe vor, die mit einteilig ausgebildeten Messern ausgerüstet ist, deren eine Schneide an die Verarbeitung des schnitzelfähigen Gutes und deren andere Schneide an die Verarbeitung des häckselfähigen Gutes angepaßt sein kann.

Diese beiden unterschiedlichen Schneiden arbeiten in unterschiedlichen Kammern, wobei die Kammertrennung durch die die Messer tragende, einzige Messerscheibe erfolgt. Die Kammer, in der das Häckseln des häckselfähigen Gutes erfolgt, kann gegenüber dem Auswurfstutzen abgetrennt werden, so daß - wenn dies erforderlich ist - ein langes Bearbeiten dieses Gutes in dieser Kammer erfolgen kann, wobei trotzdem der Auswurf für das schnitzelfähige Gut offen bleibt.

Zusätzlich zu den winkelförmig ausgebildeten Messern können auf der Messerscheibe nur in der das Häckseln des häckselfähigen Gutes durchführenden Kammer weitere Messer vorgesehen sein, deren Schneiden am Aussenumfang der Messerscheibe angeordnet sind und vorzugsweise mit im Inneren des Gehäuses angeordneten Schneidleisten zusammenwirken.

Vorteilhafte Ausgestaltungen der Erfindung sind in den Unteransprüchen erläutert.

Ein Ausführungsbeispiel der Erfindung wird nachfolgend anhand der Zeichnung beschrieben. Die Zeichnung zeigt dabei in

Fig. 1 schematisch und im Schnitt eine Zerkleinerungsvorrichtung und in

Fig. 2 im Schnitt und in Draufsicht den unteren Teil der Einrichtung gemäß Fig. 1.

In den Zeichnungen ist mit 1 ein Traggestell bezeichnet, auf dem ein Messergehäuse 2 angeordnet ist, das einen Motor 3 trägt, der eine aufrechtstehende Messerwelle 4 antreibt, die mittig unter einem Füllschacht 5 angeordnet ist. Der Füllschacht erweitert sich an seinem oberen Ende bei 6 trichterförmig und schließt mit seinem unteren Ende an das Messergehäuse 2 an. Das Messergehäuse 2 weist einen Einführstutzen 7 für schnitzelfähiges Gut, wie dickere Zweige, Äste od, dgl., auf und einen Auswurfstutzen 8, aus dem das zerkleinerte Gut ausgetragen wird.

Innerhalb des Messergehäuses 2 ist von der Messerwelle 4 getragen eine Messerscheibe 9 vorgesehen, deren Durchmesser etwa dem Innendurchmesser des Füllschachtes 5 entspricht. Die Messerscheibe 9 ist dabei in der Höhe gesehen mittig in dem Messergehäuse 2 vorgesehen, so daß oberhalb der Messerscheibe 9 und der Oberkante des Auswurfstutzens 8 eine Austragsöffnung 10 gebildet wird. Die Mündung des Füllschachtes 5 oberhalb der Messerscheibe 9 ist als Auslaßöffnung 11 und die Mündung des Einführstutzens 7 im Bereich unterhalb der Messerscheibe 9 als Auslaßöffnung 12 bezeichnet.

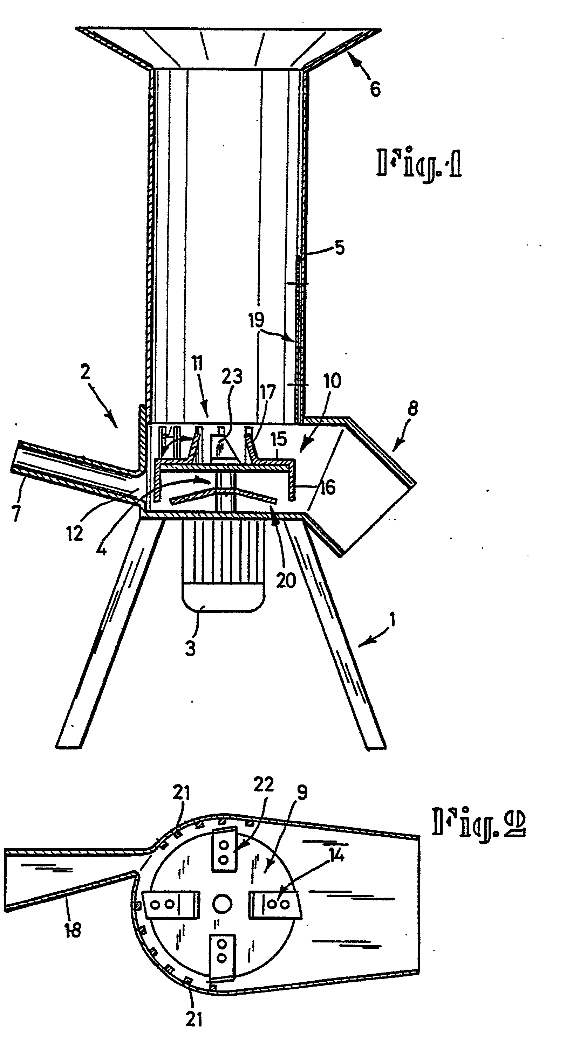

Die Messerscheibe 9 trägt zwei Winkelmesser 14. Jedes Winkelmesser weist einen Mittelflansch 15 und zwei Schneidflansche 16 und 17 auf, wobei der Mittelflansch - wie dies in Fig. 2 erkennbar ist - zur Festlegung der Winkelmesser 14 an der Messerscheibe 9 dient. Der Schneidflansch 17, der sich endseitig zur Messerwelle 4 gerichtet an den Mittelflansch 15 anschließt, ist nach oben gerichtet und Messerwelle hin geneigt, so daß die Außenseite dieses Schneidflansches 17 mit der Oberkante des Mittelflansches 15 einen Winkel $\alpha$ einschließt, der größer als 90° ist.

Der Schneidflansch 16 erstreckt sich vom Außenumfang der Schneidscheibe 9 nach unten, und zwar im wesentlichen lotrecht und läuft damit lotrecht vor der Auslaßöffnung 12 des Einführstutzens 7 vorbei.

Intermittierend zwischen den Winkelmessern 15, 16, 17 sind auf der Messerscheibe 9 zwei Schneidmesser 22 vorgesehen, die einen nach oben gerichteten Schneidflansch 23 aufweisen. Der Schneidflansch 23 arbeitet damit am Außenumfang der Messerscheibe 9.

Auf dem Innenumfang des Gehäuses im Bereich der eigentlichen Häckselkammer, d. h. also oberhalb der Messerscheibe 9 sind Schneidleisten 21 angeordnet, die eine Bremswirkung des Gutes bewirken und damit die Schneidwirkung verbessern.

Wenigstens eine Wandung des Einführstutzens 7 (die Wandung 18 gemäß Fig. 2) ist im Umlaufrichtung der Messerscheibe gesehen so ausgebildet, daß sie tangential an das Messergehäuse 2 anschließt, so daß dadurch im Zusammenwirken mit dem Schneidflansch 16 ein ziehender Schnitt erreicht wird, wobei auch der Anschliff der Messer in diesem Bereich - wie dies besonders deutlich Fig. 2 zeigt - entsprechend geformt ist.

Rein schematisch ist in Fig. 1 ein Schieber 19 dargestellt, der auf der Innenseite des Einfüllstutzens 5 vorgesehen ist und auf und ab verstellt und in den jeweiligen Lagen festgestellt werden kann, so daß es damit möglich ist, die Austragsöffnung 10 ganz oder teilweise zu verschließen, um somit die Messerkammer, in der die Schneidflansche 17 und 23 umlaufen, von der Austragsöffnung 10 abzuschließen.

Unterhalb der Messerscheibe 9 kann eine Auswurfscheibe 20 vorgesehen sein, die das Auswerfen des zerkleinerten, schnitzelfähigen Gutes unterstützt.

Die Schneidflansche 17 haben außerdem die Wirkung, daß ein Rundwickeln bzw. Aufspulen von langem, faserigen Gut vermieden wird, Dies wird durch den Neigungswinkel α unterstützt.

Aus der vorausgehenden Beschreibung ist erkennbar, daß durch die erfindungsgemäße Anordnung erreicht wird, daß das in den Füllschacht 5 eingefüllte Füllgut, d. h. das häckselfähige Gut, nach seiner Zerkleinerung nicht mehr die Schneidflansche 16 passieren muß, die in besonderer Anpassung an das schnitzelfähige Gut ausgebildet sind und die damit erheblich geschont werden und schärfer sein können und über eine längere Zeitdauer schärfer bleiben. Die Schneidflansche 17 sind an ihre Aufgabe des Häckselns angepaßt. Je nach der Art des zu verarbeitenden Gutes kann das zu häckselnde Gut mehr oder weniger lang im Füllschacht und im Einwirkungsbereich der Schneidflansche 17 verbleiben, ohne daß dadurch die Arbeitsweise mit den Schneidflanschen 16 für das schnitzelfähige Gut beeinträchtigt wird.

**Patentansprüche**

1. Vorrichtung zum Zerkleinern von schneid- oder häckselfähigem Gut, wie Laub, Rasenschnitt, Papier u. dgl. sowie von span- oder schnitzelfähigem Gut, wie dickeren Zweigen, Ästen od. dgl., mit einer einen Messersatz tragenden, motorisch angetriebenen Messerwelle (4), die in einem Messergehäuse (2) mittig und aufrechtstehend angeordnet ist, mit einem Füllschacht (5) für das häckselfähige Gut und einem Einführstutzen (7) für das schnitzelfähige Gut, die beide in das Messergehäuse (2) in unterschiedlichem Höhenabstand über getrennte Auslaßöffnungen (11, 12) münden und einem gemeinsamen Auswurfstutzen (8), der mit dem Messergehäuse (2) in Verbindung steht, wobei die Messerwelle (4) an ihrem oberen Ende eine Messerscheibe (9) trägt, die unterhalb der Auslaßöffnung (11) des Füllschachtes (5) liegt, dadurch gekennzeichnet, daß die Messerscheibe (9) einen Durchmesser aufweist, der etwa gleich dem Durchmesser des Füllschachtes (5) ist und das Messergehäuse (2) in zwei getrennte Kammern teilt und diese einzige Messerscheibe (9) oberhalb der Auslaßöffnung (12) des Einführungsstutzens (7) angeordnet ist und je zwei Schneidflansche (16, 17) und einen Mittelflansch (15) aufweisende Winkelmesser trägt, deren Mittelflansch (15) parallel zur Ebene der Messerscheibe (9) verläuft und zur Festlegung der Messer an der Messerscheibe (9) dient, während der endseitig sich in Richtung der Messerwelle (4) an den Mittelflansch (15) anschließende Schneidflansch (17) nach oben gerichtet und der sich endseitig an den Mittelflansch (15) im Bereich des Außenumfangs der Messerscheibe (9) anschließende Schneidflansch (16) nach unten gerichtet ist und sich vor der Auslaßöffnung (12) des Einführstutzens (7) in lotrechter Richtung erstreckt.

2. Vorrichtung nach Anspruch 1, gekennzeichnet durch zwei Winkelmesser (15, 16, 17).

3. Vorrichtung nach Anspruch 1 und 2, gekennzeichnet durch zwei auf der Messerscheibe (9) intermittierend zu den Winkelmessern (15, 16, 17) angeordnete Schneidmesser (22), deren Schneidflansch (23) am Außenumfang der Messerscheibe (9) angeordnet ist.

4. Vorrichtung wenigstens nach Anspruch 1, dadurch gekennzeichnet, daß die Mündung des Auswurfstutzens (8) zum Messergehäuse (2) hin den Bereich unterhalb der Messerscheibe (9) und den Bereich oberhalb der Messerscheibe (9) übergreift und mit seinem oberen Bereich an die Unterkante des Füllschachtes (5) anschließt.

5. Vorrichtung wenigstens nach Anspruch 1 und 2, dadurch gekennzeichnet, daß unterhalb der Messerscheibe (9) eine Auswurfscheibe (20) angeordnet ist.

6. Vorrichtung nach einem oder mehreren der vorhergehenden Ansprüche, dadurch gekennzeichnet, daß die Öffnung des Auswurfstutzens (8) zum Messergehäuse (2) hin in dem Bereich oberhalb der Messerscheibe durch einen Schieber (19) verschließbar ist.

7. Vorrichtung nach einem oder mehreren der vorhergehenden Ansprüche, dadurch gekennzeichnet, daß wenigstens eine Seitenwandung (18) des Einführstutzens (7) in Umlaufrichtung der Messerscheibe gesehen tangential an das Messergehäuse (2) anschließt.

8. Vorrichtung wenigstens nach Anspruch 1, dadurch gekennzeichnet, daß der nach unten gerichtete Schneidflansch (16) jedes Messers lotrecht ausgerichtet ist.

9. Vorrichtung nach Anspruch 1, dadurch gekennzeichnet, daß der nach oben gerichtete Schneidflansch (17) jedes Messers gegenüber der Lotrechten in Richtung zur Messerwelle (4) hin geneigt ist (Winkel α größer als 90°)

10. Vorrichtung nach einem oder mehreren der vorhergehenden Ansprüche, <u>dadurch gekennzeichnet</u>, daß der Durchmesser der Messerscheibe (9) im wesentlichen dem Durchmesser des Füllschachtes (5) entspricht.

11. Vorrichtung nach einem oder mehreren der vorhergehenden Ansprüche 1 bis 9, <u>dadurch gekennzeichnet</u>, daß der Durchmesser der Messerscheibe (9) größer als der lichte Durchmesser des Füllschachtes (5) ist.

12. Vorrichtung nach einem oder mehreren der vorhergehenden Ansprüche, <u>dadurch gekennzeichnet</u>, daß im Bereich oberhalb der Messerscheibe (9) am Innenumfang des Gehäuses Schneidleisten (21) angeordnet sind.

13. Vorrichtung nach einem oder mehreren der vorhergehenden Ansprüche, <u>dadurch gekennzeichnet</u>, daß die Messerscheibe (9) geschlossen ist.

**Claims**

1. Device for the comminuting of cuttable or choppable material, such as leaves, lawn mowings, paper and the like, and also of material which can be pared or shredded, such as relatively thick branches, twigs, or the like, with a motor-driven knife shaft (4) which carries a set of knives and which is arranged centrally and upright in a knife housing (2), with a feed duct (5) for the choppable material and a spout (7) through which the shreddable material can be introduced, these two parts opening into the knife housing (2) at different spaced heights via separate outlet apertures (11, 12), and with a common discharge spout (8) which communicates with the knife housing (2), the knife shaft (4) having at its upper end a knife disc (9) which is situated below the outlet aperture (11) of the feed duct (5), characterised in that the knife disc (9) has a diameter which is approximately equal to the diameter of the feed shaft (5) and divides the knife housing (2) into two separate chambers, and this single knife disc (9) is arranged above the outlet aperture (12) of the introduction spout (7) and has angle knives which each comprise two cutting flanges (16, 17) and a central flange (15), whereof the central flange (15) is disposed parallel to the plane of the knife disc (9) and is used for securing the knives to the knife disc (9), whilst the cutting flange (17) which extends from the end of the central flange (15) in the direction of the knife shaft (4) is directed upwards, and the cutting flange (16) extending from the end of the central flange (15) in the region of the outer periphery of the knife disc (9) is directed downwards, and extends in a vertical direction before the outlet aperture (12) of the introduction spout (7).

2. Device according to claim 1, characterised by two angle knives (15, 16, 17).

3. Device according to claims 1 and 2, characterised by two cutting knives (22) which are arranged on the knife disc (9) intermittently with the angle knives (15, 16, 17) and whose cutting flange (23) is arranged at the outer periphery of the knife disc (9).

4. Device at least according to claim 1, characterised in that the mouth of the discharge spout (8) towards the knife housing (2) extends over the region below the knife disc (9) and the region above the knife disc (9), and with its upper region adjoins the lower edge of the feed duct (5).

5. Device at least according to claims 1 and 2, characterised in that a discharge disc (20) is situated below the knife disc (9).

6. Device according to one or more of the preceding claims, characterised in that the mouth of the discharge spout (8) towards the knife housing (2) in the region above the knife disc is closable by a slide (19).

7. Device according to one or more of the preceding claims, characterised in that at least one side wall (18) of the introduction spout (7) adjoins the knife housing (2) tangentially as seen in the rotation direction of the knife disc.

8. Device at least according to claim 1, characterised in that the downwardly directed cutting flange (16) of each knife is vertically aligned.

9. Device according to claim 1, characterised in that the upwardly directed cutting flange (17) of each knife is inclined towards the knife shaft (4) relatively to the vertical (angle α greater than 90°).

10. Device according to one or more of the preceding claims, characterised in that the diameter of the knife disc (9) corresponds substantially to the diameter of the feed duct (5).

11. Device according to one or more of the preceding claims 1 to 9, characterised in that the diameter of the knife disc (9) is greater than the internal clear diameter of the feed duct (5).

12. Device according to one or more of the preceding claims, characterised in that cutter strips (21) are arranged in the region above the knife disc (9) at the inner periphery of the housing.

13. Device according to one or more of the preceding claims, characterised in that the knife disc (9) is a closed disc.

**Revendications**

1. Dispositif de broyage de matière sécable ou hachable telle que du feuillage, de la coupe de gazon, du papier et analogue, ainsi que de matériau découpable ou rognable tel que des rameaux assez épais, des branches ou analogues, comportant un arbre de couteaux (4) actionné au moyen d'un moteur, portant un jeu de couteaux et disposé à la verticale au centre d'une enceinte (2) de couteaux, une cuve de remplissage (5) pour la matière hachable et une tubulure d'entrée (7) pour la matière rognable, qui débouchent toutes les deux dans l'enceinte (2) des couteaux à des niveaux différents au moyen d'orifices de sortie (11, 12) séparés et qui comportent une tubulure d'éjection (8) commune qui est reliée à l'enceinte (2) des couteaux, l'arbre (4) des couteaux portant à son extrémité supérieure un disque porte-couteaux (9) qui est situé au-dessous de l'orifice de sortie (11) de la cuve de remplissage (5), caractérise en ce que le disque porte-couteaux (9) présente un diamètre qui est approximativement égal au diamètre de la cuve de remplissage (5) et il sépare l'enceinte (2) des couteaux en deux chambres séparées et ce disque porte-couteaux (9) unique est disposé au-dessus de l'orifice de sortie (12) de la tubulure d'entrée (7) et porte des couteaux angulaires présentant respectivement deux brides tranchantes (16, 17) et une bride centrale (15) qui s'étend parallèlement au plan du disque porte-couteaux (9) et sert à fixer les couteaux au disque porte-couteaux (9) tandis que la bride tranchante (17) prolongeant la bride centrale (15) du côté extrémité en direction de l'arbre (4) des couteaux est dirigée vers le haut et que la bride tranchante (16) prolongeant la bride centrale (15) du côté extrémité au niveau de la périphérie extérieure du disque porte-couteaux (9) est dirigée vers le bas et se prolonge d'aplomb devant l'orifice de sortie (12) de la tubulure d'entrée (7).

2. Dispositif selon la revendication 1, caractérisé par deux couteaux angulaires (15, 16, 17).

3. Dispositif selon l'une des revendications 1 et 2, caractérisé par deux couteaux de coupe (22) disposés sur le disque porte-couteaux (9) de manière intermittente par rapport aux couteaux angulaires (15, 16, 17), dont la bride tranchante (23) est disposée sur la périphérie extérieure du disque porte-couteaux (9).

4. Dispositif selon au moins la revendication 1, caractérisé en ce que l'embouchure de la tubulure d'éjection (8) en direction de l'enceinte (2) des couteaux empiète sur la zone située au-dessous du disque porte-couteaux (9) et sur la zone située au-dessus dudit disque porte-couteaux (9) et prolonge le bord inférieur de la cuve de remplissage (5) par sa zone supérieure.

5. Dispositif selon au moins la revendication 1, caractérisé en ce qu'un disque d'éjection (20) est disposé au-dessous du disque porte-couteaux (9).

6. Dispositif selon l'une ou plusieurs des revendications précédentes, caractérisé en ce que l'orifice de la tubulure d'éjection (8) peut se fermer en direction de l'enceinte (2) des couteaux dans la zone située au-dessus du disque porte-couteaux (9) au moyen d'un tiroir (19).

7. Dispositif selon l'une ou plusieurs des revendications précédentes, caractérisé en ce qu'au moins une paroi latérale (18) de la tubulure d'entrée (7) prolonge l'enceinte (2) des couteaux de manière tangentielle par rapport au sens de rotation du disque porte-couteaux (9).

8. Dispositif selon au moins la revendication 1, caractérisé en ce que la bride tranchante (16), dirigée vers le bas, de chaque couteau est alignée d'aplomb.

9. Dispositif selon la revendication 1, caractérisé en ce que la bride tranchante (17), dirigée vers le haut, de chaque couteau est inclinée, par rapport à la perpendiculaire, en direction de l'arbre (4) des couteaux (angle supérieur à 90°).

10. Dispositif selon l'une ou plusieurs des revendications précédentes, caractérisé en ce que le diamètre du disque porte-couteaux (9) correspond substantiellement au diamètre de la cuve de remplissage (5).

11. Dispositif selon l'une ou plusieurs des revendications 1 à 9, caractérisé en ce que le diamètre du disque porte-couteaux (9) est supérieur au diamètre intérieur de la cuve de remplissage (5).

12. Dispositif selon l'une ou plusieurs des revendications précédentes, caractérisé en ce que des rebords tranchants (21) sont disposés sur le pourtour intérieur de l'enceinte dans la zone située au-dessus du disque porte-couteaux (9).

13. Dispositif selon l'une ou plusieurs des revendications précédentes, caractérisé en ce que le disque porte-couteaux (9) est fermé.

Fig. 1

Fig. 2